# EUROPEAN PATENT APPLICATION

(11) **EP 3 617 253 A1**
(43) Date of publication of application: **04.03.2020**
(21) Application number: 18397524.2
(22) Date of filing: 31.08.2018
(51) Int. Cl.: C08J 3/24, C08J 9/08, C08J 9/10

(54) **A METHOD FOR CROSSLINKING POLYETHYLENE**

(71) Applicant: Unipex Oy, 33540 Tampere (FI)
(72) Inventor: Heino, Aarne, 33540 Tampere (FI)
(74) Representative: Berggren Oy, Tampere

(57) **Abstract**

The specification relates to a method for crosslinking polyethylene. The method comprises introducing polyethylene, silane, peroxide and a crosslinking catalyst into an extruder, or introducing polyethylene pre-grafted with silane and a crosslinking catalyst into an extruder, and extruding the contents of the extruder. The method further comprises introducing water into the extruder before extruding the contents of the extruder. The specification further provides a method for producing crosslinked polyethylene foam.

## Description

### Technical field

This specification relates to a method for crosslinking polyethylene. Some aspects of the specification relate to a method for crosslinking polyethylene by a silane crosslinking method. Some aspects of the specification relate to a method for producing crosslinked polyethylene foam.

### Background

Crosslinked polyethylene, commonly abbreviated PEX, is a form of polyethylene with crosslinks. PEX may be used for example in pipework systems, radiant heating and cooling systems, domestic water piping, and insulation of electrical cables.

Crosslinking is typically divided into three categories, namely peroxide crosslinking (PEX-a), silane crosslinking (PEX-b) and electron beam crosslinking (PEX-c).

In silane crosslinking (PEX-b) method, polyethylene is crosslinked by using silanes. The silane molecule is grafted onto the polyethylene polymer chain typically with a small amount of peroxide in the extruder. The crosslinking itself takes place outside the extruder and is initiated by water, for example in a water bath, steam chamber, or at ambient conditions. Water molecules diffuse into the polymer material and cause the crosslinking to take place. This is a time-consuming step, as the diffusion of water into the polyethylene is a slow process. Depending on wall thickness of the product to be crosslinked, the diffusion may even take several days.

### Summary

This specification provides a method for crosslinking polyethylene by a silane crosslinking method, by which method water needed for the crosslinking reaction to take place is introduced in an easy, efficient and rapid manner. The specification further provides a method for producing crosslinked polyethylene foam.

According to an aspect of the specification a method for crosslinking polyethylene is disclosed. The method comprises
- introducing polyethylene, silane, peroxide and a crosslinking catalyst into an extruder,
   or
   introducing polyethylene pre-grafted with silane and a crosslinking catalyst into an extruder, and
- extruding the contents of the extruder;
the method further comprises introducing water into the extruder before extruding the contents of the extruder.

### Detailed description

A crosslink is a bond that links one polymer chain to another. Crosslinks are formed by chemical reactions that may be initiated for example by heat, pressure, change in pH, or radiation. By crosslinking a spatial network is formed. In synthetic polymer science field, crosslinking usually refers to a use of crosslinks to promote a difference in the polymers' physical properties. A crosslinkable polymer may be a polyolefin. Polyolefins are a class of polymers produced from a simple olefin (also called an alkene with a general formula CₙH₂ₙ) as a monomer. Polyolefins include for example polyethylene (PE), polypropylene (PP), polymethylpentene (PMP) and polybutene-1 (PB-1).

Crosslinked polyethylene (PEX) is a form of polyethylene with crosslinked bonds in the polymer structure. Crosslinking of polyethylene is typically divided into three categories, namely peroxide crosslinking (PEX-a), silane crosslinking (PEX-b) and electron beam crosslinking (PEX-c).

In silane crosslinking (PEX-b) method, polyethylene is crosslinked by using silanes. Silane refers to an organosilicon compound. The organosilicon compounds are compounds that contain at least one carbon-silicon bond. At first, a polyethylene radical is generated in the polyethylene chain either by radiation or by a peroxide, and the polyethylene radical is Si-functionalized by allowing it to react with a silane. This may also be called grafting the polyethylene chain with silane, and the product may be called Si-grafted polyethylene. Following that, Si-OH groups are formed by hydrolysis. Finally, the Si-OH groups condense and crosslink the polyethylene by the formation of Si-O-Si bridges. A crosslinking catalyst and water are needed for the crosslinking to take place.

According to an embodiment, a method for crosslinking polyethylene is provided. The method comprises introducing polyethylene, silane, peroxide and a crosslinking catalyst into an extruder. The method comprises extruding the contents of the extruder. The method further comprises introducing water into the extruder before extruding the contents of the extruder.

The substances may be introduced to the extruder such that polyethylene as a masterbatch is fed to the extruder. Silane, peroxide and the crosslinking catalyst may be mixed to form a mixture, and the mixture may be injected by a pump into the extruder. The point of injecting the mixture may be close to the point of feeding the polyethylene masterbatch, such that the components have enough time for reacting before being extruded from the extruder.

In the extruder, the polyethylene reacts with the peroxide to produce a polyethylene radical. The polyethylene radical then reacts with the silane to produce an Si-grafted polyethylene. The silane used for Si-grafting may be a vinyl-substituted silane. The vinyl-substituted silane may be for example vinyltrimethoxysilane.

The Si-grafted polyethylene reacts by subsequent hydrolysis and condensation reactions for the crosslinking to take place. The crosslinking catalyst and water are needed for the crosslinking reaction to take place. The crosslinking catalyst may be a tin derivative. The tin derivative may be for example dibutyltinlaurate.

Water may be introduced into the extruder as a liquid water or, preferably, as a mixture of polyethylene and water. Water may be mixed with a small amount of polyethylene outside the extruder before introducing into the extruder. The small amount of polyethylene refers to a maximum of 10 wt-% of the total amount of polyethylene, preferably to 3 - 5 wt-% of the total amount of polyethylene. The polyethylene into which the water is mixed, does not get crosslinked, which restricts the amount to be used. Introducing water into the extruder as a mixture of polyethylene and water is preferred, as water more easily gets mixed with the contents of the extruder in that case. Amount of water introduced into the extruder may be 0.1 - 5 % of a volume of the contents of the extruder. The amount of water introduced into the extruder should be kept as low as possible, as excess water may cause unwanted formation of bubbles when boiling.

Water is preferably introduced into the extruder at an end of the extruder in a direction of propagation of the extruder. A direction of propagation of the extruder refers to a direction in which the contents of the extruder are extruded from the extruder, in other words, a direction in which the material is arranged to proceed from a hopper to a die. The extruder comprises a mixing section arranged between an extruder screw and the die. According to an embodiment, water is introduced into the extruder at the end of the extruder, directly before the mixing section. The contents of the extruder may also be called an extrudate. Water may be injected into the extruder by a pump. As soon as both the crosslinking catalyst and water are added to the extruder, the crosslinking reaction may take place. Thus, it is of importance, that either one of the compounds, the catalyst or water, is added to the extruder as late as possible. However, it is of importance, that the water or the mixture of polyethylene and water is introduced into the extruder such that it has enough time to properly mix with the contents of the extruder before extrusion.

According to another embodiment, a method for crosslinking polyethylene is introduced, wherein the polyethylene is pre-grafted with silane outside the extruder. The polyethylene pre-grafted with silane refers to a crosslinkable polyethylene. The method comprises introducing polyethylene pre-grafted with silane and a crosslinking catalyst into an extruder. The method comprises extruding the contents of the extruder. The method further comprises introducing water into the extruder before extruding the contents of the extruder.

Polyethylene, silane and peroxide are first allowed to react in a separate process in order to form the crosslinkable polyethylene. Polyethylene as a masterbatch may be fed to a compounding extruder. Silane and peroxide may be mixed to form a mixture, and the mixture may be injected by a pump into the compounding extruder. The point of injecting the mixture may be close to the point of feeding the polyethylene masterbatch, such that the components have enough time for reacting before being extruded from the compounding extruder. The extrudate, namely the Si-grafted polyethylene, from the compounding extruder may be processed directly or stored in dry conditions prior use.

The crosslinking catalyst may be mixed with a small amount of polyethylene to form a catalyst masterbatch. The polyethylene pre-grafted with silane, namely the Si-grafted polyethylene may then be introduced into the catalyst masterbatch, and a blend comprising both masterbatches is introduced into the extruder. Alternatively, the crosslinking catalyst may be mixed to the Si-grafted polyethylene. The crosslinking catalyst may be a tin derivative. The tin derivative may be for example dibutyltinlaurate.

Water may be introduced into the extruder as a liquid water or, preferably, as a mixture of polyethylene and water. When using the mixture of polyethylene and water, polyethylene may also be Si-grafted. Water may be mixed with a small amount of polyethylene outside the extruder before introducing into the extruder. Amount of water introduced into the extruder may be 0.1 - 5 % of a volume of the contents of the extruder.

Water is preferably introduced into the extruder at an end of the extruder in a direction of propagation of the extruder. A direction of propagation of the extruder refers to a direction in which the contents of the extruder are extruded from the extruder, in other words, a direction in which the material is arranged to proceed from a hopper to a die. The extruder comprises a mixing section arranged between an extruder screw and the die. According to an embodiment, water is introduced into the extruder at the end of the extruder, directly before the mixing section. As soon as both the crosslinking catalyst and water are added to the extruder, the crosslinking reaction may take place. Thus, it is of importance, that either one of the compounds, the catalyst or water, is added to the extruder as late as possible.

According to a further embodiment, a method for crosslinking polyethylene is introduced, wherein crosslinked polyethylene foam is obtained. The method comprises introducing polyethylene, silane, peroxide and a crosslinking catalyst, or, alternatively, polyethylene pre-grafted with silane and a crosslinking catalyst into an extruder as described above. The method comprises extruding the contents of the extruder, and introducing water into the extruder before extruding the contents of the extruder. The method further comprises introducing into the extruder an additive capable of releasing gaseous substance. The method may further comprise heating the extruded material after extruding the contents of the extruder for obtaining the crosslinked polyethylene foam. The additive capable of releasing gaseous substance may be such that it releases the gaseous substance already in the temperature of the extruder. In that case it is not necessary to heat the extruded material after the extrusion in order to form the crosslinked polyethylene foam.

The additive capable of releasing gaseous substance may release the gaseous substance for example by the influence of heat. The gaseous substance may be for example nitrogen gas (N₂) or carbon dioxide (CO₂). The additive is adapted to release the gaseous substance in such a way that a closed-cell foam structure is obtained. In closed-cell foam, the gas forms discrete pockets, each completely surrounded by the polyethylene material.

As the water needed for the crosslinking to take place is introduced already into the extruder, there is no need to treat the extruded product by water after the extrusion. Thus, the silane crosslinking is performed in a one-step treatment, without a need for a time-consuming post-extrusion treatment. This speeds up the crosslinking process when compared to the traditional method, wherein the crosslinking takes place after the extrusion, for example by allowing the water molecules to diffuse into the polymer material in a water bath, steam chamber, or at ambient conditions. Thus, the manufacturing of silane crosslinked products becomes faster. Further, the presented one-step treatment allows for saving manufacturing space, as it is not necessary to allocate space for the post-extrusion treatment.

A method for crosslinking polyethylene is presented. The method comprises introducing polyethylene, silane, peroxide and a crosslinking catalyst into an extruder, or introducing polyethylene pre-grafted with silane and a crosslinking catalyst into an extruder, and extruding the contents of the extruder. The method further comprises introducing water into the extruder before extruding the contents of the extruder. The water may be introduced into the extruder as a mixture of polyethylene and water. The water may be introduced into the extruder directly before a mixing section. Water may be introduced into the extruder in an amount of 0.1 - 5 % of a volume of the contents of the extruder. Peroxide may be introduced into the extruder in an amount of 0.05 - 1 wt-% of the amount of polyethylene. Silane may be a vinyl-substituted silane. The crosslinking catalyst may be a tin derivative, preferably dibutyltinlaurate.

The method may further comprise introducing into the extruder an additive capable of releasing gaseous substance for obtaining crosslinked polyethylene foam. The method may further comprise heating the extruded material after extruding the contents of the extruder. The gaseous substance may be nitrogen gas or carbon dioxide. The additive may be adapted to release the gaseous substance in such a way that a closed-cell foam structure is obtained.

Many variations of the method will suggest themselves to those skilled in the art in light of the description above. Such obvious variations are within the full intended scope of the appended claims.

## Claims

1. A method for crosslinking polyethylene, the method comprising
- introducing polyethylene, silane, peroxide and a crosslinking catalyst into an extruder,
or
introducing polyethylene pre-grafted with silane and a crosslinking catalyst into an extruder, and
- extruding the contents of the extruder,
**characterized in that** the method further comprises introducing water into the extruder before extruding the contents of the extruder.

2. A method for crosslinking polyethylene according to claim 1, wherein the water is introduced into the extruder as a mixture of polyethylene and water.

3. A method for crosslinking polyethylene according to claim 1 or 2, wherein the water is introduced into the extruder directly before a mixing section.

4. A method for crosslinking polyethylene according to any of the previous claims, wherein water is introduced into the extruder in an amount of 0.1 - 5 % of a volume of the contents of the extruder.

5. A method for crosslinking polyethylene according to any of the previous claims, wherein peroxide is introduced into the extruder in an amount of 0.05 - 1 wt-% of the amount of polyethylene.

6. A method for crosslinking polyethylene according to any of the previous claims, wherein silane is a vinyl-substituted silane.

7. A method for crosslinking polyethylene according to any of the previous claims, wherein the crosslinking catalyst is a tin derivative, preferably dibutyltinlaurate.

8. A method for crosslinking polyethylene according to any of the previous claims, wherein the method further comprises introducing into the extruder an additive capable of releasing gaseous substance for obtaining crosslinked polyethylene foam.

9. A method for crosslinking polyethylene according to claim 8, wherein the method further comprises heating the extruded material after extruding the contents of the extruder.

10. A method for crosslinking polyethylene according to claims 8 or 9, wherein the gaseous substance is nitrogen gas or carbon dioxide.

11. A method for crosslinking polyethylene according to any of claims 8 to 10, wherein the additive is adapted to release the gaseous substance in such a way that a closed-cell foam structure is obtained.
